# EUROPÄISCHE PATENTANMELDUNG

(11) **EP 3 217 280 A1**
(43) Veröffentlichungstag der Anmeldung: **13.09.2017**
(21) Anmeldenummer: 17000365.1
(22) Anmeldetag: 07.03.2017
(51) Int. Cl.: G06F 9/445

(54) **PATCH VERFAHREN, INSBESONDERE BEI METHODEN-AUFRUF**

(30) Priorität: 08.03.2016 DE 102016002771
(71) Anmelder: Giesecke+Devrient Mobile Security GmbH, 81677 München (DE)
(72) Erfinder: Uminska-Ziesche, Monika, 80992 München (DE); Ettengruber, Franz, 94436 Simbach (DE); Winter, Robert, 81369 München (DE)

(57) **Zusammenfassung**

Die Erfindung schafft ein Verfahren zum Einbinden eines Patch in eine aufgerufene Methode mittels zweier bei Methodenaufruf gesetzter und bei Methodenabarbeitung verwendeter Data Watch Points.

## Beschreibung

### Gebiet der Erfindung

Die Erfindung betrifft ein Verfahren zum gesteuerten Ausführen eines Programmcodes auf einem Microcontroller, das, insbesondere bei Aufruf einer Methode des Programmcodes, Einbinden eines Patch-Code ermöglicht.

### Stand der Technik

Microcontroller haben Programmcode verteilt in unterschiedlichen Speichern, teils im nur lesbaren ROM, teils im wiederbeschreibbaren EEPROM oder Flash-Speicher. Speziell das Betriebssystem ist häufig im ROM vorgesehen, Applets sind in der Regel im EEPROM oder Flash-Speicher vorgesehen. Ein fehlerhafter Teil des Programmcodes im ROM kann nicht direkt berichtigt werden. Stattdessen wird der fehlerhafte Teil übersprungen und durch einen im EEPROM oder Flash-Speicher abgelegten Patch-Code ersetzt.

Objektorientierte Programmiersprachen, insbesondere Java, verfolgen das Konzept der Plattformunabhängigkeit durch Virtualisierung. Hierbei wird der Quellcode eines Programmcodes durch einen (z.B. Java-) Compiler in (Java-) Bytecode übersetzt, der durch eine Virtuelle Maschine ausgeführt werden kann. Die Virtuelle Maschine interpretiert die Bytecodes und macht sie hierdurch durch einen zugrundeliegenden Prozessor (echte Hardware-Maschine) ausführbar.

Gemäß einem firmeninternen Stand der Technik der Anmelderin wird für Java Cards ein Verfahren zum Einbinden eines im EEPROM oder Flash vorliegenden Patch-Codes in einen im ROM vorliegenden ROM-Bytecode vorgeschlagen.

Hierbei wird, gemäß einer ersten Alternative, bei jedem Aufruf einer Methode dieses ROM-Bytecodes, den die Virtuelle Maschine der Java Card mittels eines INVOKE-Kommandos durchführt, durch die Virtuelle Maschine überprüft, ob für die Methode eine Patch-Routine (abgeschlossener Patch-Code, der selbst eine vollständige Methode bildet) vorliegt, durch welche die gesamte Methode ersetzt werden soll. Ist dies der Fall, wird statt der Methode aus dem ROM die Patch-Routine aus dem EEPROM / Flash aufgerufen. Da die gesamte Methode gepatcht wird, ist diese erste Alternative speicherintensiv. Da die Überprüfung auf Patches nur bei Methodenaufruf erfolgt, ist die Geschwindigkeit der Virtuellen Maschine nur minimal reduziert.

Gemäß einer zweiten Alternative wird, nicht schon bei Methoden-Aufruf, dafür vor jedem einzelnen Bytecode-Befehl überprüft, ob ein Patch-Code für diesen einzelnen Bytecode-Befehl vorliegt. Hierdurch werden nur die erforderlichen Bytecode-Befehle selektiv gepatcht. Hierdurch ist diese zweite Variante speichersparend. Auf Grund der vielen Überprüfungen auf Patches verlangsamt das Verfahren die Virtuelle Maschine erheblich.

Der Erfindung liegt die Aufgabe zu Grunde, ein Verfahren zum gesteuerten Ausführen eines Programmcodes zu schaffen, das eine Einbindung von Patch-Code ermöglicht, das sowohl speichersparend ist als auch mit möglichst wenig Einbußen bei der Geschwindigkeit bei der Programmcode-Ausführung auskommt.

Das Dokument DE 10234971 B4 offenbart ein Verfahren zum gesteuerten Ausführen eines Programmcodes unter Steuerung eines Compilers, wobei vor einer Funktion des Programmcodes mittels eines Aussprungbefehls ein Aussprung aus dem Programmcode in eine Patch-Routine erfolgt, so dass die Funktion des Haupt-Programmcodes durch die Patch-Routine ersetzt wird. Hierzu wird im Quelltext des Programmcodes vor der Deklaration der Funktion eine Compiler-Direktive eingefügt, die, ausgeführt durch den Compiler, einen Unterprogramm-Aufrufbefehl erzeugt, der in die Patch-Routine führt. Die im Dokument DE 10234971 B4 offenbarte Lösung erfordert eine Anpassung am Quellcode, dahingehend, dass die Compiler-Direktive eingefügt werden muss.

Eine Reihe von Microcontrollern, z.B. der NXP P60 der Firma NXP, unterstützen das für das Debugging geschaffene Hardware-Werkzeug der Data Watchpoints. Gemäß diesem Werkzeug kann ein Data Watchpoint auf eine beliebige Speicheradresse des Microcontrollers gesetzt werden. Führt der Microcontroller einen Speicherzugriff (dieser kann lesend oder schreibend sein) auf die mit dem Data Watchpoint belegte Speicheradresse durch, wird eine Watch Exception ausgelöst und ein Aussprung in z.B. eine Debugging-Routine ermöglicht.

Im Dokument US 2009/0037703 A1 ist ein Verfahren zum Einbinden eines Debuggers in einen Programmablauf unter Verwendung eines in einem Programmcode, in einer Befehlsfolge des Programmcodes, angeordneten Data Watchpoint offenbart. Trifft der Programmablauf bei der Ausführung der Befehlsfolge auf den Data Watchpoint, wird, bevor die Ausführung der Befehlsfolge vollendet wird, der gerade aktuelle Befehlskontext überprüft. Bei einem positiven Ergebnis der Überprüfung wird ein Debugger aufgerufen. Andernfalls wird der gerade anstehende Befehl der Befehlsfolge ausgeführt.

### Zusammenfassung der Erfindung

Die Aufgabe wird gelöst durch ein Verfahren nach Anspruch 1. Vorteilhafte Ausgestaltungen der Erfindung sind in den abhängigen Ansprüchen angegeben.

Das erfindungsgemäße Verfahren nach Anspruch 1 ist zum gesteuerten Ausführen eines Programmcodes auf einem Microcontroller eingerichtet, das ein Einbinden eines Patch-Code in den Programmcode ermöglicht.

Der Programmcode umfasst eine aufrufende Methode und eine durch die aufrufende Methode aufgerufene Methode. Die aufgerufene Methode ist als eine Abfolge von ein oder mehreren Code-Segmenten gestaltet. Der Patch-Code ist dazu eingerichtet, die aufgerufene Methode, falls diese fehlerhafte Code-Segmente umfasst, ab einem ersten fehlerhaften Code-Segment bis zu einem letzten fehlerhaften Code-Segment durch den Patch-Code zu ersetzen. Der Microcontroller unterstützt mindestens zwei Data Watchpoints.

Das Verfahren umfasst die folgenden durch den Microcontroller durchgeführten Schritte:
a) durch die aufrufende Methode, Aufrufen der aufgerufenen Methode;
b) anlässlich des Aufrufens der aufgerufenen Methode, Überprüfen, ob für die aufgerufene Methode ein Patch-Code vorliegt;
c) falls gemäß b) ein Patch-Code für die aufgerufene Methode vorliegt:
d) Bereitstellen des Patch-Code und eines an den Patch-Code angehängten Dummy-Code-Segments; das Bereitstellen wird z.B. erreicht, indem Erreichbarkeit des Speichers sichergestellt wird, in dem der Patch-Code und das Dummy-Code-Segment liegen, so dass der Microcontroller auf den Patch-Code und das Dummy-Code-Segment Zugriff hat;
e) Ermitteln des ersten fehlerhaften Code-Segments der aufgerufenen Methode, insbesondere anhand des Patch-Code, z.B. daran, mit welchem Code-Segment der Patch-Code beginnt;
f) Setzen eines ersten Data Watchpoint auf die Speicheradresse des ermittelten ersten fehlerhaften Code-Segments;
g) Setzen eines zweiten Data Watchpoint auf die Speicheradresse des an den Patch-Code angehängten Dummy-Code-Segments;
h) Ausführen des Programmcodes der aufgerufenen Methode durch Abarbeiten der Code-Segmente bis hin zum ersten fehlerhaften Code-Segment;
i) bei Erreichen des ersten fehlerhaften Code-Segments, Erreichen des ersten gesetzten Data Watchpoint und hierdurch Auslösen einer ersten Watch Exception;
j) bedingt durch die ausgelöste erste Watch Exception, Ausführen des Patch-Codes bis hin zum Dummy-Code-Segment;
k) bei Erreichen des Dummy-Code-Segments, Erreichen des zweiten gesetzten Data Watchpoint und hierdurch Auslösen einer zweiten Watch Exception;
l) bedingt durch die ausgelöste zweite Watch Exception, Rückkehr zur Ausführung der aufgerufenen Methode.

Der eigentlich für Debugging vorgesehen Data Watchpoint Mechanismus wird in dieser Lösung genutzt, um einen Patch-Code als Ersatz für fehlerhafte Code-Segmente einer Methode einzubinden. Hierzu wird bei einem Methodenaufruf, anstatt die gesamte Methode zu patchen, zunächst nur an die Adresse des ersten fehlerhaften Code-Segments der Methode ein erster Data Watchpoint gesetzt, der später einen Aussprung aus der aufgerufenen Methode in den Patch-Code bewirken soll. Hierdurch werden, gesehen im chronologischen Ablauf des Programmablaufs, alle fehlerfreien Code-Segmente der Methode bis hin zum ersten fehlerhafte Code-Segment beibehalten. Erst ab dem ersten fehlerhaften Code-Segment springt der Programmablauf aus der Methode aus, und in den Patch-Code. Folglich ist der Patch-Code um die nicht-gepatchten fehlerfreien Code-Segmente kleiner als der Patch-Code beim herkömmlichen Patchen einer kompletten Methode. Dennoch muss die Überprüfung auf Patches nicht bei jedem einzelnen Code-Segment durchgeführt werden, sondern nur bei Methodenaufruf, so dass die Einbußen bei der Geschwindigkeit des Microcontrollers minimal sind.

Da mit dem beschriebenen Verfahren keine vollständige Methode gepatcht wird, existiert zunächst kein definierter Rücksprung in die mittels des Patch-Code gepatchte, aufgerufene Methode. Um den Rücksprung in die gepatchte, aufgerufene Methode zu ermöglichen, sind der zweite gesetzte Data Watchpoint und das Dummy-Code-Segment vorgesehen. Ein Data Watchpoint benötigt zu seinem Setzen eine Adresse irgend eines Teils des Programmcodes, z.B. eines Code-Segments. Dem Data Watchpoint nachfolgender Programmcode wird nicht ausgeführt. Würde der zweite Data Watch Point auf das letzte Code-Segment des Patch-Code gesetzt, würde dieses letzte Code-Segment des Patch-Code nicht ausgeführt. Das Dummy-Code-Segment ist gezielt dazu eingerichtet, einen Ankerpunkt zum Setzen des zweiten Data Watchpoint zu bilden und stellt sicher, dass alle vor dem Dummy-Code-Segment liegenden funktionellen Code-Segmente des Patch-Codes ausgeführt werden. Das Dummy-Code-Segment selbst wird nicht ausgeführt (da davor ja die Watch Exception ausgelöst wird).

Daher ist gemäß Anspruch 1 ein Verfahren zum gesteuerten Ausführen eines Programmcodes geschaffen, das ein Einbinden von Patch-Code ermöglicht, das sowohl speichersparend ist als auch mit möglichst wenig Einbußen bei der Geschwindigkeit der Virtuellen Maschine auskommt.

Wahlweise ist der Patch-Code ebenfalls aus Code-Segmenten aufgebaut, wobei die Code-Segmente der zu patchenden aufgerufenen Methode durch Code-Segmente des Patch-Code ersetzt werden.

Wahlweise ist der Programmcode als Abfolge von Bytecodes einer objektorientierten Programmiersprache, insbesondere Java, gestaltet. Als Code-Segmente sind hierbei Bytecodes vorgesehen. Die durch den Microcontroller durchgeführten Schritte a) bis j) werden durch eine auf dem Microcontroller laufende Virtuelle Maschine VM durchgeführt, insbesondere eine Java VM.

Wahlweise ist die aufgerufene Methode in einem dem Microcontroller zugeordneten Nur-Lese-Speicher (z.B. ROM) gespeichert. In diesem Fall werden also die Data Watchpoints auf Adressen von Bytecodes gesetzt.

Wahlweise ist der Patch-Code in einem dem Microcontroller zugeordneten Schreib-Lese-Speicher gespeichert, insbesondere einem EEPROM oder Flash-Speicher.

Wahlweise werden die Data Watchpoints in einem dem Microcontroller zugeordneten Schreib-Lese-Speicher, insbesondere einem EEPROM oder Flash-Speicher, gesetzt.

Wahlweise sind die gesetzten Data Watchpoints, bevor sie gemäß Schritt f) bzw. g) gesetzt werden, an eine für den jeweiligen Data Watchpoint spezifische Standard-Adresse gesetzt, wobei nach dem Auslösen der Watch Exception der jeweilige Data Watchpoint wieder auf seine Standard-Adresse gesetzt wird. Der jeweilige Data Wachtpoint wird in diesem Fall vorübergehend, für die Dauer der Abarbeitung des Patch-Codes, auf Adressen gesetzt, die das Einbinden des Patch-Code ermöglichen bzw. erwirken. Nach Abarbeitung des Patch-Code nehmen die Data Watchpoints wieder ihre Standard-Adress-Einstellungen ein.

Wahlweise sind die aufrufende Methode, die aufgerufene Methode und der Patch-Code jeweils als eine Abfolge von Instruktionen (d.h. von Befehlen bzw. Programmcode-Befehlen) gestaltet. Ggf., falls der Programmcode in Form von Bytecodes vorliegt, ist jeder Bytecode als eine Abfolge von ein von oder mehreren solchen Instruktionen gestaltet.

Der Patch-Code umfasst wahlweise: Code-Segmente zum Ersetzen der fehlerhaften Code-Segmente der aufgerufenen Methode, eine Positionsangabe und eine Rückkehradresse in die aufgerufene Methode. Die Positionsangabe umfasst wahlweise: Angabe der aufgerufenen Methode und eine Adressangabe, die die erste und die letzte fehlerhafte Adresse umfasst, oder die es anderweitig ermöglicht, die erste und die letzte fehlerhafte Adresse der aufgerufenen Methode zu ermitteln.

Das Verfahren umfasst wahlweise die weiteren Schritte: m) Abarbeiten der restlichen Code-Segmente der aufgerufenen Methode; n) Rückkehr des Programmablaufs zur aufrufenden Methode und weiter Ausführen der aufrufenden Methode.

Bei einem generellen Verfahren zum Einbinden eines Patch-Code in eine Methode wird ein auf ein erstes fehlerhaftes Code-Segment (z.B. Instruktion) der Methode gesetzter Data Watchpoint zum Aussprung aus der Methode in den Patch-Code verwendet. Ein zweiter Data Watch Point, der auf ein Dummy-Code-Segment (z.B. Dummy-Instruktion) gesetzt ist, das an ein letztes Code-Segment (z.B. Instruktion) des Patch Code angehängt ist, wird zum Rücksprung in die Methode verwendet. Vorzugsweise werden die Data Watchpoints anlässlich eines Aufrufs der Methode gesetzt. Die Methode wird wahlweise aus einer aufrufenden Methode heraus aufgerufen. Details des generellen Verfahrens sind wahlweise gestaltet wie in den abhängigen Ansprüchen zu Anspruch 1 angegeben.

Die Erfindung schafft somit ein Verfahren zum Einbinden eines Patch in eine (aufgerufene) Methode mittels zweier - vorzugsweise bei Methodenaufruf gesetzter - und bei Methodenabarbeitung verwendeter Data Watch Points.

### Kurze Beschreibung der Zeichnungen

Im Folgenden wird die Erfindung an Hand von Ausführungsbeispielen und unter Bezugnahme auf die Zeichnung näher erläutert, in der zeigt:

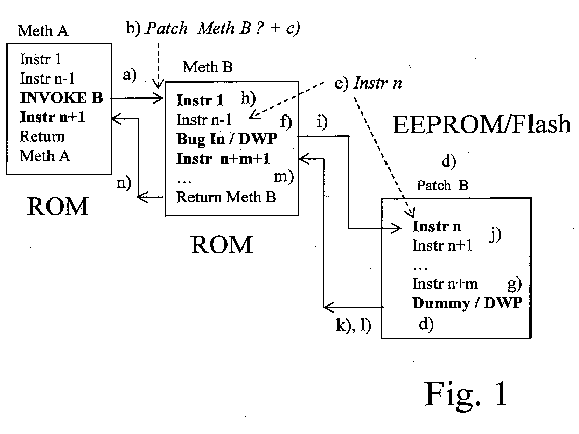

- Fig.1: ein Ablaufschema zum Einbinden eines Patch in eine Methode B, die durch eine Methode A aufgerufen wird, gemäß einer Ausführungsform der Erfindung.

### Detaillierte Beschreibung von Ausführungsbeispielen

Fig.1 zeigt ein Ablaufschema zum Einbinden eines Patch-Code Patch B, in eine aufgerufene Methode Meth B, die durch eine aufrufende Methode Meth A, aufgerufen wird, gemäß einer Ausführungsform der Erfindung. Eventuelle weitere Methoden, z.B. C Meth, sind nicht dargestellt.

Das Verfahren wird in einer Microcontroller-Anordnung ausgeführt, z.B. in einer Smart Card, insbesondere einer Java Card. Die Microcontroller-Anordnung umfasst eine Recheneinheit CPU, einen Nur-Lese-Speicher ROM und einen Schreib-Lese-Speicher, z.B. einem EEPROM oder Flash-Speicher.

Die aufrufende Methode A und die aufgerufene Methode B sind im Nur-Lese-Speicher ROM gespeichert, was eine direkte Korrektur von Fehlern in der Methode B unmöglich macht. Ein Patch für Methode B ist im Schreib-Lese-Speicher, z.B. einem EEPROM oder Flash-Speicher, gespeichert.

Die aufrufende Methode Meth A, die aufgerufene Methode Meth B und der Patch-Code Patch B sind aus Code-Segmenten aufgebaut, die als Instruktionen Instr 1, ... Instr n-1, ... Instr n+m etc. gestaltet sind.

Methode A wird gestartet und die ersten n Instruktionen Instr 1 bis Instr n werden abgearbeitet. Mit a) einem INVOKE Befehl wird Methode B aufgerufen. Anlässlich des Aufrufens der aufgerufenen Methode B, b) wird überprüft, ob für die aufgerufene Methode B ein Patch-Code vorliegt. Im Ausführungsbeispiel aus Fig.1 wird c) festgestellt, dass ein Patch-Code Patch B für die aufgerufene Methode vorliegt. Folglich d) wird der Patch-Code Patch B (umfassend m Instruktionen Instr n bis Instr n+m) bereitgestellt, sowie eine an den Patch-Code angehängte Dummy-Instruktion Dummy. e) Anhand der ersten Instruktion Instr n des Patch-Codes Patch B (bzw. anhand deren Index n) wird ermittelt, dass Instruktion n die erste fehlerhafte Instruktion der aufgerufenen Methode B ist, und dass somit Methode B ab Instruktion n zu patchen ist. f) Weiter wird ein erster Data Watchpoint auf die Speicheradresse der ermittelten ersten fehlerhaften Instruktion gesetzt, also auf Instruktion n von Methode B. g) Ein zweiter Data Watchpoint wird auf die Speicheradresse der Dummy-Instruktion Dummy gesetzt, die an die echten Instruktionen des Patch-Code Patch B angehängt ist. Nun ist Methode B für das Patchen vorbereitet und die Ausführung von Methode B wird gestartet. h) Der originäre Programmcode der aufgerufenen Methode B wird durch Abarbeiten der ersten n-1 Instruktionen Instr 1 bis Instr n-1 bis hin zur ersten fehlerhaften Instrukton, Instruktion n, ausgeführt. i) Erst bei Erreichen der ersten fehlerhaften Instrukton, Instruktion n, wird in den Patch-Code Patch B gewechselt. Im Detail wird der erste gesetzte Data Watchpoint erreicht. Hierdurch wird eine erste Watch Exception ausgelöst. j) Bedingt durch die ausgelöste erste Watch Exception wird der Patch-Code Patch B ausgeführt, indem die m Instruktionen Instr n bis Instr n+m von Patch B bis hin zur Dummy-Instruktion ausgeführt werden. k) Bei Erreichen der Dummy-Instruktion wird der zweite gesetzte Data Watchpoint erreicht. Hierdurch wird eine zweite Watch Exception ausgelöst.1) Bedingt durch die ausgelöste zweite Watch Exception kehrt der Programmablauf zurück zur Ausführung der aufgerufenen Methode B. Methode B wird mit der Instruktion Instr n+m+1 weitergeführt. Instruktionen n bis n+m der Methode B wurden übersprungen. Unter Umständen kann die Anzahl Instruktionen im Patch unterschiedlich sein von der Anzahl der in Methode B übersprungenen Instruktionen, in Fig.1 sind die beiden Anzahlen von Instruktionen in Patch B und in Methode B jedoch gleich (und gleich m). m) Nun werden die restlichen Instruktionen von Methode B, die den übersprungenen und gepatchten m Instruktionen von Methode B nachfolgen, ausgeführt. n) Schließlich springt der Programmablauf, mit Beenden der aufgerufenen Methode B, zur aufrufenden Methode A zurück, und Methode A wird zu Ende ausgeführt.

## Patentansprüche

1. Verfahren zum gesteuerten Ausführen eines Programmcodes auf einem Microcontroller, das ein Einbinden eines Patch-Code (Patch B) in den Programmcode ermöglicht, wobei:
- der Programmcode eine aufrufende Methode (A) und eine aufgerufene Methode (B) umfasst, wobei die aufgerufene Methode (B) als eine Abfolge von ein oder mehreren Code-Segmenten (Instr) gestaltet ist;
- der Patch-Code (Patch B) dazu eingerichtet ist, die aufgerufene Methode (B), falls diese fehlerhafte Code-Segmente (Instr n ... Instr n+m) umfasst, ab einem ersten fehlerhaften Code-Segment (Instr n) bis zu einem letzten fehlerhaften Code-Segment (Instr n+m) durch den Patch-Code (Patch B) zu ersetzen;
- der Microcontroller mindestens zwei Data Watchpoints (DWP) unterstützt; und
- das Verfahren die durch den Microcontroller durchgeführten Schritte umfasst:
a) durch die aufrufende Methode (A), Aufrufen der aufgerufenen Methode (B);
b) anlässlich des Aufrufens der aufgerufenen Methode (B), Überprüfen, ob für die aufgerufene Methode (B) ein Patch-Code (Patch B) vorliegt;
c) falls gemäß b) ein Patch-Code (Patch B) für die aufgerufene Methode (B) vorliegt:
d) Bereitstellen des Patch-Code (Patch B) und eines an den Patch-Code (Patch B) angehängten Dummy-Code-Segments (Dummy);
e) Ermitteln des ersten fehlerhaften Code-Segments (Instr n) der aufgerufenen Methode (B);
f) Setzen eines ersten Data Watchpoint (DWP) auf die Speicheradresse des ermittelten ersten fehlerhaften Code-Segments (Instr n);
g) Setzen eines zweiten Data Watchpoint (DWP) auf die Speicheradresse des an den Patch-Code angehängten Dummy-Code-Segments (Dummy);
h) Ausführen des Programmcodes der aufgerufenen Methode (B) durch Abarbeiten der Code-Segmente (Instr 1 ... Instr n-1) bis hin zum ersten fehlerhaften Code-Segment (Instr n);
i) bei Erreichen des ersten fehlerhaften Code-Segments (Instr n), Erreichen des ersten gesetzten Data Watchpoint (DWP) und hierdurch Auslösen einer ersten Watch Exception;
j) bedingt durch die ausgelöste erste Watch Exception, Aufrufen und Ausführen des Patch-Codes (Patch B) bis hin zum Dummy-Code-Segment (Dummy);
k) bei Erreichen des Dummy-Code-Segments (Dummy), Erreichen des zweiten gesetzten Data Watchpoint (DWP) und hierdurch Auslösen einer zweiten Watch Exception;
l) bedingt durch die ausgelöste zweite Watch Exception, Rückkehr zur Ausführung der aufgerufenen Methode (B).

2. Verfahren nach Anspruch 1, wobei der Programmcode als Abfolge von Bytecodes einer objektorientierten Programmiersprache, insbesondere Java, gestaltet ist, als Code-Segmente Bytecodes vorgesehen sind, und die durch den Microcontroller durchgeführten Schritte a) bis j) durch eine auf dem Microcontroller laufende Virtuelle Maschine durchgeführt werden.

3. Verfahren nach Anspruch 1 oder 2, wobei die aufgerufene Methode in einem dem Microcontroller zugeordneten Nur-Lese-Speicher (ROM) gespeichert ist.

4. Verfahren nach einem der Ansprüche 1 bis 3, wobei der Patch-Code (Patch B) in einem dem Microcontroller zugeordneten Schreib-Lese-Speicher gespeichert ist, insbesondere einem EEPROM oder Flash-Speicher.

5. Verfahren nach einem der Ansprüche 1 bis 4, wobei die Data Watchpoints (DWP) in einem dem Microcontroller zugeordneten Schreib-Lese-Speicher, insbesondere einem EEPROM oder Flash-Speicher, gesetzt werden.

6. Verfahren nach einem der Ansprüche 1 bis 5, wobei die gesetzten Data Watchpoints (DWP), bevor sie gemäß Schritt f) bzw. g) gesetzt werden, an eine für den jeweiligen Data Watchpoint (DWP) spezifische Standard-Adresse gesetzt sind, und wobei nach dem Auslösen der Watch Exception der jeweilige Data Watchpoint (DWP) wieder auf seine Standard-Adresse gesetzt wird.

7. Verfahren nach einem der Ansprüche 1 bis 6, wobei die aufrufende Methode (A), die aufgerufene Methode (B) und der Patch-Code (Patch B) jeweils als eine Abfolge von Instruktionen (Instr) gestaltet sind, und wobei ggf. jeder Bytecode als eine Abfolge von ein oder mehreren Instruktionen (Instr) gestaltet ist.

8. Verfahren nach einem der Ansprüche 1 bis 7, wobei der Patch-Code (Patch B) umfasst:
- Code-Segmente (Instr n ... Instr n+m) zum Ersetzen der fehlerhaften Code-Segmente der aufgerufenen Methode (B);
- eine Positionsangabe, umfassend
--- eine Angabe der aufgerufenen Methode (B) und
--- eine Adressangabe, die die Adresse des ersten und des letzte fehlerhaften Code-Segments (Instr n, Instr n+m) umfasst, oder die es anderweitig ermöglicht, die Adresse des ersten und des letzten fehlerhaften Code-Segments (Instr n, Instr n+m) der aufgerufenen Methode (B) zu ermitteln; und
- eine Rückkehradresse in die aufgerufene Methode (B).

9. Verfahren nach einem der Ansprüche 1 bis 8, wobei das Verfahren die weiteren Schritte umfasst:
m) Abarbeiten der restlichen Code-Segmente (Instr n+m+1 ...) der aufgerufenen Methode (B);
n) Rückkehr des Programmablaufs zur aufrufenden Methode (A).

10. Verfahren zum Einbinden eines Patch-Code (Patch B) in eine Methode (B), wobei:
- ein auf ein erstes fehlerhaftes Code-Segment (Instr n) der Methode gesetzter Data Watchpoint (DWP) zum Aussprung aus der Methode (B) in den Patch-Code (Patch B) verwendet wird; und
- ein zweiter Data Watch Point (DWP), der auf ein Dummy-Code-Segment (Dummy) gesetzt ist, das an ein letztes Code-Segment (Instr n+m) des Patch Code (Patch B) angehängt ist, zum Rücksprung in die Methode (B) verwendet wird.

11. Verfahren nach Anspruch 10, wobei die Data Watchpoints (DWP) anlässlich eines Aufrufs der Methode (B) gesetzt werden.
